# EUROPEAN PATENT SPECIFICATION

(11) **EP 2 234 293 B1**
(45) Date of publication and mention of the grant of the patent: **08.08.2018**
(21) Application number: 08700759.7
(22) Date of filing: 30.01.2008
(51) Int. Cl.: H04B 10/25

(54) **A METHOD FOR TRANSPARENT TRANSMITTING 10GE ETHERNET SIGNAL THROUGH THE OPTICAL TRANSPORT NETWORK**
VERFAHREN ZUM TRANSPARENTEN SENDEN EINES 10GE-ETHERNET-SIGNALS DURCH DAS OPTISCHE TRANSPORTNETZWERK
PROCÉDÉ DE TRANSMISSION TRANSPARENTE DE SIGNAL ETHERNET 10GE PAR L'INTERMÉDIAIRE DU RÉSEAU DE TRANSPORT OPTIQUE

(30) Priority: 22.11.2007 CN 200710077425
(43) Date of publication of application: 29.09.2010
(73) Proprietor: ZTE Corporation, Shenzhen, Guangdong 518057 (CN)
(72) Inventor: ZHAO, Yi, Guangdong 518057 (CN)
(74) Representative: Novagraaf Technologies
(86) International application number: PCT/CN2008/000240
(87) International publication number: WO 2009/065281

(56) References cited:
- EP-A1- 2 071 750
- WO-A2-2006/113021
- CN-A- 1 773 898
- CN-A- 1 852 215
- US-A1- 2005 141 569
- "Transport of IEEE 10GBASE-R in optical transport networks (OTN); G.Sup43 (11/06)", ITU-T STANDARD, INTERNATIONAL TELECOMMUNICATION UNION, GENEVA ; CH, no. G.Sup43 (11/06), 10 November 2006 (2006-11-10), pages 1-18, XP017465365, [retrieved on 2007-04-10]

## Description

### Filed of the Invention

The present invention relates to the transmission of Ethernet services through the optical transport network (OTN), in particular to a method for transparently transmitting 10GE Ethernet (10GELAN, namely 10GE LAN, also called 10 GE Ethernet) signal through the OPU2 payload region of the optical channel transport unit of the optical transport network.

### Background of the Invention

Optical transport network (OTN) is an optical transport criterion constituted by the ITU-T, which is mainly composed of encapsulations of various hierarchies, such as OPUk (optical channel payload unit), ODUk (optical channel data unit), OTUk (optical channel transport unit), wherein k=1, 2 or 3, which represents different orders. The three kinds of OTU speed respectively correspond to their own ODU and OPU speed. The specific conditions are detailed in G.709 optical transport network standard of the ITU-T. The definition of each order of the OTUk is shown in Table 1.

**Table 1: OTUk types and bit rates.**

| OTU type | OTU nominal speed | OTU speed tolerance |
|---|---|---|
| OTU1 | 255/238 × 2 488 320 kbit/s | ±20 ppm |
| OTU2 | 255/237 × 9 953 280 kbit/s | |
| OTU3 | 255/236 × 39 813 120 kbit/s | |

Wherein, the OTU nominal speed is approximately: 2 666 057.143 kbit/s (OTU1), 10 709 225.316 kbit/s (OTU2) and 43 018 413.559 kbit/s (OTU3).

Similar to the concepts of the section hierarchy and the channel hierarchy in the SDH (Synchronous Digital Hierarchy), each hierarchy has a corresponding overhead byte which monitors and manages the information of client hierarchy. The OTN uses a plurality of methods such as GFP encapsulation, asynchronous mapping, synchronous mapping etc. to map the client services to the same frame structure for transmission. Compared with the traditional SDH, the OTN has the advantages of large cross granularity, transparent service transmission, high encapsulation efficiency and so on. However, since the criterion is constituted comparatively early, it has not anticipated the high speed increase of the Ethernet services nowadays, in particular that it is not adapted to the Ethernet standard series constituted by the IEEE (institute of electrical and electronics engineers) standard organization, resulting in that the speed series of the Ethernet services can not be transmitted properly in the frame of the OTN. The payload speed of the OTN transport system and the interface speed of the Ethernet are shown in Table 2.

**Table 2: the corresponding table of the OPU payload speed and the interface speed of the Ethernet.**

| OPU payload speed kbit/s | interface speed of the Ethernet kbit/s |
|---|---|
| OTU1 | GE |
| 2488 320 | 1250Gbit/s |
| OTU2 | 10GE |
| 9 953 280 | 10312.5 (LAN interface ) |
| | 9953.280 ( WAN interface ) |
| OTU3 | Undetermined (un-standardized yet) |
| 39 813 120 | |

As shown in Table 2, the speeds of the two typical interfaces of the Ethernet, i.e. GE interface and 10GE LAN interface do not have any appropriate OTN orders to adapt. If the GE interface is carried by the OPU1, bandwidth is wasted. For the 10GE LAN, which has a bit higher speed than the payload bandwidth of the OPU2, the bandwidth is insufficient if it is transmitted through standard OPU2, while the bandwidth is much wasted it is transmitted through OPU3. Therefore, how to utilize the OTN to transmit the Ethernet signal effectively, and especially how to transparently transmit the 10GELAN signal are urgently to be solved, which results in the emerge of various private mapping methods.

Aiming at the solutions proposed by various parties, the ITU-T specially establishes an informative document Sup43 which compares various possible solutions. The main manners and the advantages/disadvantages thereof are shown in Table 3.

**Table 3: The transmission manners of the 10GELAN in the OPU2.**

| Manners adopted (corresponding sections in Sup43) | Characteristics |
|---|---|
| Standard mapping (6.2) | Use GFP-F encapsulation; the interface speed is the standard 10.709Gbit/s; can only transmit MAC frame, but can not transmit preamble code and frame gap. |
| Overclock manner (7.1, 7.2) | Both manners use nonstandard line speed; mapping the 10GELAN signal using the CBR mapping manner; can transmit the information of preamble code and frame gap and so on. |
| Undefined overhead transmission (7.3) | Utilize the seven undefined bytes in the OPU overhead to expand the OPU2 bandwidth; the line speed is the same as the standard line speed; can transmit preamble code, but can not completely transmit frame gap. |
| CBR service mapping manner with agnostic speed | The manner is described in the Living-List of the ITU-T standard G709, is similar to the CBR mapping manner; use undefined OPU2 overhead to indicate the number of effective bytes in the payload. |

In consideration of actual demand of "completely transparent transmission" of the client signal, the standard mapping manner and the transmission manner of utilizing undefined overhead to expand the bandwidth as shown in Table 3 can not meet the demand. The bandwidth of the 10GELAN is larger than the standard OPU2 bandwidth, therefore the overclock OPU2 (corresponding to higher OTU2 speed) has to be used. The technology is called overclock, and can be subdivided into two methods of OPU2e and OPU1e. The former method retains the two columns of fixed filling bytes when the ODU2 maps STM-64, and the later method does not have the two columns of fixed filling, so the line speed may be reduced.

However, the other two mapping manners as shown in the table also have defects when transmitting the 10GELAN service. The overclock manner still uses the mapping manner similar to the CBR (constant bit rate) services, and arranges only one byte to perform +/0/- adjustment. According to the G.709 standard, the mapping manner can only adapt ±65ppm of the frequency difference. Considering that the OPUk has a 20ppm of the frequency difference, so the allowable client signal is ±45ppm. While the frequency deviation of the 10GELAN service is as high as ±100ppm, therefore, asynchronous mapping can not be performed.

If the synchronous mapping manner is used, that is to say, the OPU2 clock is locked in the 10GELAN service, the frequency deviation problem can be ignored, but its expandability is comparatively poor. It is only suitable for a point-to-point connection, or asynchronous cross at intermediate nodes, but can not support synchronous cross. Therefore, the adapted speed can not enter a cross network to perform synchronous cross, because a synchronous cross network requires to use the same ODU clock, while the synchronous mapping ODU clock originates from the 10GELANs, but the 10GELANs are generally allogenous.

For the CBR mapping manner with agnostic bit, the undefined overhead bytes can be used to indicate actual transmitting bytes, and the frequency difference problem can be well adapted. However, the positions of the specific filling bytes can not be indicated, the filling bytes can not be assigned uniformly in the payload region either. Thus, a comparatively large buffer memory area is needed to adapt the maximum frequency difference between the 10GELAN and the OPU2 payload region.

In addition, since the number of the bytes of the OPU2 payload region is 3808×4=15232 bytes, about 13 bits are needed to indicate the filling state thereof. When other concatenated applications exist, more bits are needed which will occupy comparatively large number of OPU overhead bits. Different application scenarios need different overhead bytes to monitor and control, for example, in virtual concatenation, the three overheads of the first, second and third rows in the fifteenth column of the OUT frame structure are needed for indication. Therefore, the mapping manner occupying comparatively many OPU overheads is also unacceptable.

EP 2071750 A1, cited under Article 54(3) EPC, discloses a method and a system for transporting Ethernet traffic in optical transport network. The method includes the following steps: filling no less than two NJOs (Negative Justification Opportunity) in the overhead of OPUk (Optical Payload Unit) and the corresponding PJOs (Positive Justification Opportunity) with justification octets or Ethernet traffic octets, and filling the pay-load of OPUk with Ethernet traffic octets; the transmitter sends Ethernet traffic data by ODUk including OPUk to the receiver. However, the above mentioned problem still remains unsolved.

Therefore, the prior art has defects and needs to be improved.

### Summary of the Invention

The present invention solves the technical problem of how to use the asynchronous mapping manner to provide a method for transparently transmitting the 10GE Ethernet signal through the optical transport network, to ensure that the 10GELAN service can be completely and transparently transmitted through the optical transport network, and the frequency deviation of the client is adapted.

The technical scheme of the present invention is as follows:
A method for transparently transmitting the 10GE Ethernet signal through the optical transport network, using a first asynchronous mapping manner to transparently transmit 10GE Ethernet signal; wherein the construction of the first asynchronous mapping manner includes the following steps: A1, indicating the first asynchronous mapping manner using a reserved value of anyone of payload structure identifiers; A2, constructing an optical channel transport unit frame of the first asynchronous mapping manner, in an adjusting and controlling byte thereof, predefining, using at least three bits, a filling state of a positive/negative adjusting byte, adding a negative adjusting byte in an optical channel payload unit overhead region of the optical channel transport unit frame, and adding a positive adjusting byte in a payload structure; A3, constructing, using a reference clock, an overclocked optical channel transport unit frame, and the frequency thereof being 11.0491Gbit/s±20ppm.

Wherein before using a first asynchronous mapping manner to transparently transmit 10GE Ethernet signal, a judging step is executed: judging whether the first asynchronous mapping manner is usable.

Wherein The method according to Claim 1, characterized in that in step A2, at least five kinds of filling states of the positive/negative adjusting byte are pre-defined as shown in the following table.

| 3 bits | negative adjusting byte 1 | negative adjusting byte 2 | positive adjusting byte 1 | positive adjusting byte 2 |
|---|---|---|---|---|
| 000 | adjusting byte | data byte | data byte | data byte |
| 001 | data byte | data byte | data byte | data byte |
| 010 | adjusting byte | adjusting byte | data byte | data byte |
| 011 | adjusting byte | adjusting byte | adjusting byte | data byte |
| 100 | adjusting byte | adjusting byte | adjusting byte | adjusting byte |

Wherein in step A3, the frequency of the overclocked optical channel transport unit frame is 11.0491Gbit/s.

Wherein the other 5 undefined bits of the adjusting and controlling byte are used as identifier bits, and a majority decision principle is used to judge whether the received adjusting and controlling byte is correct.

Wherein the frequency of the reference clock is 690.5688Mbit/s or 172.6422Mbit/s.

Wherein the reference clock is a clock which is allogenous to the 10GE Ethernet signal.

Wherein the reference clock is a system clock or an independent auto-oscillation clock.

Using the above solution, the present invention can transparently transmit complete 10GELAN signal in the asynchronous mapping manner, so that the speed of the ODU is allogenous to the client speed, which is convenient for the cross device to perform ODU level cross dispatching to the services. In addition, through expanded byte adjusting solution, the frequency deviation of the client signal is completely adapted. Expansion is performed only to the undefined bits of the PSI (Payload Structure Identifier) and JC (Justification Control) bytes, so as to avoid occupying too many OPU overheads, and to have a strong expandability, which is more suitable to possible mixed application modes in the future.

### Brief Description of the Drawings

Fig.1 is a schematic view of the frame structure of the OTN of the prior art;
Fig.2 is a schematic view of the overhead definition of the OPU of the prior art;
Fig.3 is a schematic view of the overhead definition of the OPU of the present invention;
Fig.4 is an encapsulating treatment flow chart of the 10GELAN of the present invention.

### Detailed Description of Embodiments

The present invention will be described in detail hereinafter in connection with the embodiments and drawings of the present invention.

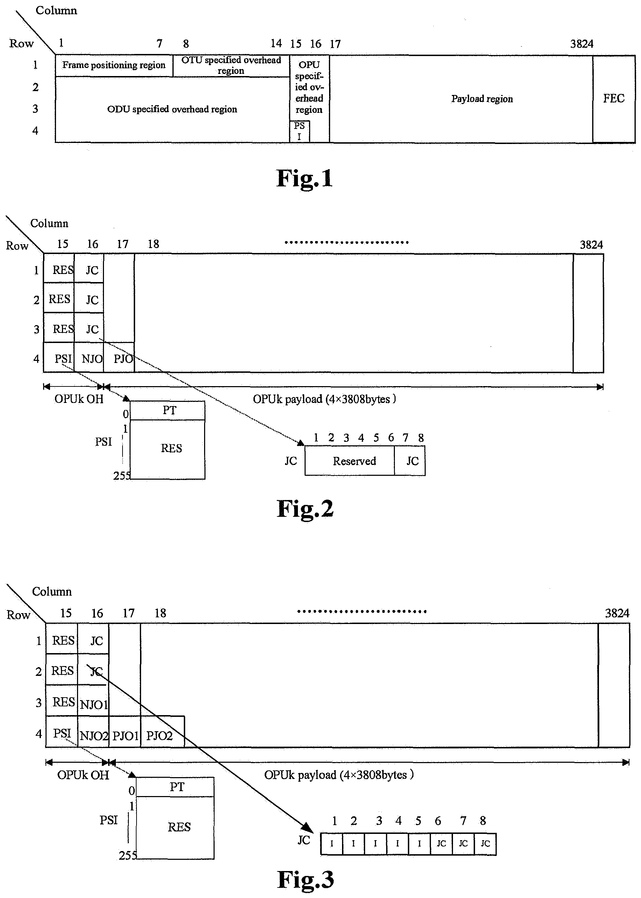

The G.709 criterion constituted by the ITU-T standard organization defines and standardizes the characteristics of the OTN. As shown in Fig.1, the frame structure of the OTN comprises 4 rows and 4080 columns, totally 4×4080=16320 bytes; wherein the columns from the first to the sixteenth are an overhead region; the columns from the seventeenth to the 3824th are a payload region; the columns from the 3825th to the 4080th are an FEC (forward error correcting code) region. The overhead region in the frame structure can be further divided: the bytes from the first to the sixth in the first row are a frame indication region; the seventh byte is a multiframe indication MFAS, 256 multiframes being allowed; the bytes from the eighth to the fourteenth are an OTU overhead; the columns from the first to the fourteenth in the rows from the second to the fourth are all ODU overhead; and the sixteenth and seventeenth columns in the rows from the first to the fourth are an OPU overhead.

The present invention uses the same frame structure. The speed of the OPU payload region is turned into the speed of the 10GELAN, thus corresponding OTU speed is: 255/238×10.3125=11.0491Gbit/s. The present invention provides a method for transparently transmitting the 10GE Ethernet signal (10GELAN) through an optical channel transport unit (OTU2) in the optical transport network. The method uses a first asynchronous mapping manner to transparently transmit 10GE Ethernet signal What is even better is that before using a first asynchronous mapping manner to transparently transmit 10GE Ethernet signal, a judging step is executed: judging whether the first asynchronous mapping manner is usable. If yes, the first asynchronous mapping manner is used to transparently transmit the 10GE Ethernet signal.

The construction of the first asynchronous mapping manner is described in detail hereafter.

A1, a reserved value PSI [0] of anyone of payload structure identifiers is used to indicate the first asynchronous mapping manner. As shown in Fig.2, for the CBR mapping manner stated in the G.709, the specific mapping manners are defined respectively by PSI byte and JC bytes. Wherein the content of the PSI byte is shown in Table 4 when the multiframe is zero. The present invention uses a self-defined asynchronous mapping manner which differs from the rules of the criterion. Therefore, a new kind of code needs to be defined to represent the asynchronous mapping manner of the present invention, for example, the value of the PSI [0] can be set as 0X12 or other reserved value. The present invention does not have any limitation thereto.

**Table 4: the values of the PSI [0] in the G709 criterion.**

| MSB 1 2 3 4 | LSB 5 6 7 8 | Hex code (Note 1) | Interpretation |
|---|---|---|---|
| 0 0 0 0 | 0 0 0 1 | 01 | Experimental mapping (Note 3) |
| 0 0 0 0 | 0 0 1 0 | 02 | Asynchronous CBR mapping, see 17.1 |
| 0 0 0 0 | 0 0 1 1 | 03 | Bit synchronous CBR mapping, see 17.1 |
| 0 0 0 0 | 0 1 0 0 | 04 | ATM mapping, see 17.2 |
| 0 0 0 0 | 0 1 0 1 | 05 | GFP mapping, see 17.3 |
| 0 0 0 0 | 0 1 1 0 | 06 | Virtual Concatenated signal, see clause 18 (Note 5) |
| 0 0 0 1 | 0 0 0 0 | 10 | Bit stream with octet timing mapping, see 17.5.1 |
| 0 0 0 1 | 0 0 0 1 | 11 | Bit stream without octet timing mapping, see 17.5.2 |
| 0 0 1 0 | 0 0 0 0 | 20 | ODU multiplex structure, see clause 19 |
| 0 1 0 1 | 0 1 0 1 | 55 | Not available (Note 2) |
| 0 1 1 0 | 0 1 1 0 | 66 | Not available (Note 2) |
| 1 0 0 0 | x x x x | 80-8F | Reserved codes for proprietary use (Note 4) |
| 1 1 1 1 | 1 1 0 1 | FD | NULL test signal mapping, see 17.4.1 |
| 1 1 1 1 | 1 1 1 0 | FE | PRBS test signal mapping, see 17.4.2 |
| 1 1 1 1 | 1 1 1 1 | FF | Not available (Note 2) |

A2, the optical channel transport unit frame of the first asynchronous mapping manner is constructed; the frame structure of the OTN is basically the same as mentioned before, but in an adjusting and controlling byte thereof, a filling state of a positive/negative adjusting byte is predefined using at least three bits, a negative adjusting byte is added in its optical channel payload unit overhead region, and a positive adjusting byte is added in its payload structure.

For example, to be specific, in the adjusting and controlling byte of the optical channel transport unit frame corresponding to the first asynchronous mapping manner, three bits are used to pre-define the filling state of the positive/negative adjusting byte. For example, the adjusting and controlling byte can use three bits to pre-define the five filling states of the positive adjusting byte PJO and negative adjusting byte NJO. Specific explanation is as follows.

The JC byte definition of the G709 criterion is as shown in Table 5. In the present invention, the original JC byte definition needs to be expanded. The two bits value majority decision method in the original three JC bytes is changed to that every JC byte uses three bits to represent five different filling states, so that the JC byte definition needs to be expanded as shown in Table 6.

**Table 5: the Values of the JC of G709 Criterion.**

| JC bits 7 8 | NJO | PJO |
|---|---|---|
| 0 0 | adjusting byte | data byte |
| 0 1 | data byte | data byte |
| 10 (this value is not generated possibly due to fault reception) | adjusting byte | data byte |
| 1 1 | adjusting byte | adjusting byte |

**Table 6: the Values of the JC in the Expanded Definition.**

| JC bits6 7 8 | NJO1 | NJO2 | PJO1 | PJO2 |
|---|---|---|---|---|
| 000 | adjusting byte | data byte | data byte | data byte |
| 001 | data byte | data byte | data byte | data byte |
| 010 | adjusting byte | adjusting byte | data byte | data byte |
| 011 | adjusting byte | adjusting byte | adjusting byte | data byte |
| 100 | adjusting byte | adjusting byte | adjusting byte | adjusting byte |

Wherein, the first column in Table 6 represents the various combination values of the sixth, seventh and eighth bits of the JC byte. The other columns represent the filling states of the adjusting bytes corresponding to the values of the JC. The "adjusting byte" means the byte is filled with filling information. The "data byte" means the byte is filled with client information. What is even better is that the other 5 undefined bits of the adjusting and controlling byte are used as identifier bits, and a majority decision principle is used to judge whether the received adjusting and controlling byte is correct. That is to say, the five undefined bits in the JC byte can also be defined as identifier bit I, and the judgment principle is similar to the I and D bit reversals of SDH pointer value. The majority decision principle is used to judge whether the received value of the JC is correct. When a new JC value is accompanied with reversals of a majority of I bits, it represents that a new filling state does occur, otherwise the transmission of the value of the JC is considered to have error code.

Furthermore, as shown in Fig.3, a negative adjusting byte is added in the overhead region of the optical channel payload unit of the optical channel transport unit frame; and a positive adjusting byte is added in the payload structure. For example, the byte of the third row in the sixteenth column of the optical channel transport unit frame can be set as the negative adjusting byte; and the byte of the fourth row in the eighteenth column can be set as the positive adjusting byte.

For the expansion of the adjusting byte, as shown in Fig.3, the byte of the OPU overhead region at the third row in the sixteenth column can be re-defined as a negative adjusting byte; and the byte of the OPU payload region at the fourth row in the eighteenth column can be re-defined as a positive adjusting byte. The undefined bytes in the OPU overhead region are used to expand the original +/0/- adjusting into -2/-1/0/+1/+2 adjusting. That is to say, the positive adjusting is increased to two bytes; and the negative adjusting is also increased to two bytes, so that the client signal frequency deviation of ±100ppm can be adapted.

A3, an overclocked optical channel transport unit frame is constructed using a reference clock, and the frequency thereof is 11.0491Gbit/s±20ppm. With reference to the G.709 criterion, under the circumstance without calculating and filling fixed filling columns, the payload speed of the OPU2 is 9.953280Gbit/s±20ppm. While that of the 10GELAN signal stated in the 802.3ae criterion is 10.3125Gbit/s±100ppm. Therefore, in order to completely and transparently transmit the 10GELAN signal, the nominal frequency of the OPU2 has to be improved, the reference clock with a higher speed is used to construct the OTU2 frame of 11.0491Gbit/s, so that the 10GELAN signal of 10.3125Gbit/s can be loaded.

For example, the frequency of the overclocked optical channel transport unit frame is 11.0491Gbit/s, wherein the reference clock is a clock which is allogenous to the 10GELAN signal. For example, the reference clock is a system clock or an independent auto-oscillation clock. That is to say, the reference clock can be the clock which is allogenous to the 10GELAN signal such as the system clock or the independent auto-oscillation clock.

Considering that the reference clock can use 16 frequency division or 64 frequency division, one example is that the frequency of the reference clock is 11.0491Gbit/s÷16 =690.56875Mbit/s; or is 11.0491Gbit/s÷64=172.64219Mbit/s.

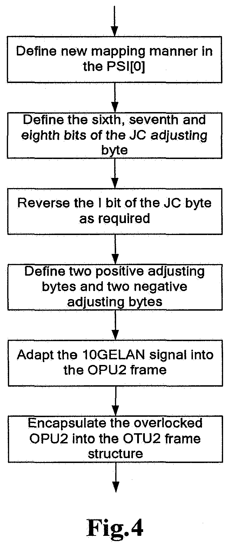

The working process of the method of the present invention is described in detail hereafter in connection with Fig.4. As shown in Fig.4, the method of the present invention for transparently transmitting the 10GELAN signal is mainly based on three parts in practice: providing overclocked frame, expanding the adjusting byte and expanding the definition of the OPU overhead.

### 1. Providing overclocked frame.

The reference clock which has a higher speed than the standard OTU2, and the frame structure which is exactly the same with the original OTU, ODU and OPU are used to construct the overclocked OTU2 frame. The frequency of the frame is higher than the original standard speed of 255/237×9.953280 =10.709 Gbit/s, ensuring that the line speed of the OTU2 reaches 11.0491Gbit/s. The source of the reference clock is not limited. The reference clock can be the system clock, the auto-oscillation clock and so on. The embodiment of the present invention takes the example that no fixed filling column is in the OPU2 payload region. In practical application, the circumstance supporting the fixed filling columns can be realized through simple rational analysis; nothing remains but to improve the line speed properly and to add the filling bytes in fixed columns. Whether the fixed filling columns are used can be determined according to practical application, and the present invention does not provide details here any more.

### 2. Expanding the adjusting byte: mainly for adapting the comparatively great frequency deviation of the client signal.

As shown in Fig.3, the two adjusting bytes added by the present invention, and the original two adjusting bytes are defined respectively as NJO1, NJO2, PJO1 and PJO2. The adjustable bytes takes 2/(4×3824)=130ppm proportion in the OPU payload. Therefore, the method of the invention can adapt maximum ±130ppm frequency deviation, and can meet ±110ppm the frequency deviation demand of the client in addition to the ±20ppm frequency deviation of the ODU. The frequency deviation of the 10GELAN is ±100ppm which can be asynchronously mapped into the OPU2 structure. The negative adjusting byte can be selected from any of the seven bytes of the OPU overhead region expect for the PSI byte. In the embodiment of the present invention, the bytes of the third and fourth rows of the sixteenth column in the OTU frame structure are used as the negative adjusting bytes, and the bytes of the fourth row at the seventeenth and eighteenth columns are used as the positive adjusting bytes.

### 3. Expanding the definition of the overhead byte: the present invention needs to expand the definition of the bytes in the OPU overhead region.

A new mapping type definition is added to the PSI value when the OTN multiframe indicates zero. The normal PSI[0] values as shown in Table 4 are added with 0X12 to represent the mapping manner of the present invention.

The three JC bytes used by the asynchronous mapping as shown in Fig.2, are expanded as shown in Fig.3, JC judgment bytes are added to three bits to adapt the five different filling situations of the asynchronous mapping. The rest five bits of the JC byte use majority reversal to identify the new adjusting chance either indeed happens or is resulted by error code. Two sets of JC bytes can reduce the happening of adjusting false action further. The original one JC byte is turned into the negative adjusting byte NJO1.

The definition of the JC judgment byte is as shown in Table 6, and thus will not be described here any more.

The other overhead bytes of the OPU, such as the first, second and third rows of the fifteenth column remain Reserved state, and can perform expanded application in the future. For example, they can be defined as VCPOH overhead when the OPU needs to perform virtual concatenation.

The present invention provides a method for transparently transmitting the 10GELAN service through an optical transport network OTU2. The method uses asynchronous mapping manner to adapt the frequency deviation of the client completely, ensures the 10GELAN service is transparently and completely transmitted through the OTU2, solves the defects of the mapping manner of the prior art, and also has the following advantages:
(1) The method can transmit complete 10GELAN signal transparently, including the information such as the prefix code, client frame, interframe gap, and delimiter;
(2) The method uses asynchronous mapping manner, so that the speed of the ODU is allogenous to the client speed, which is convenient for the cross device to perform ODU level cross dispatching to the services;
(3) The expanded byte adjusting solution can adapt the frequency deviation of ±100ppm of the client signal completely;
(4) The method does not need to alter the overhead bytes such as the OTU and the ODU, expansion is performed only to the undefined bits of the PSI and JC bytes, so as to avoid occupying too many OPU overheads, and is more suitable to possible mixed application modes in the future.

Particularly, those skilled in the art can use the concept and method of the present invention into the seamless abutting service between the 10GE or more than 10GE Ethernet and the optical transport network.

What should be understood is that for those skilled in the art, the present invention may have various improvements and variations. Any improvements, variations etc. are all concluded in the protection scope of the claims of the present invention.

## Claims

1. A method for transparently transmitting the 10GE Ethernet signal through the optical transport network, using a first asynchronous mapping manner to transparently transmit 10GE Ethernet signal; wherein the construction of the first asynchronous mapping manner includes the following steps:
A1, indicating the first asynchronous mapping manner using a reserved value of anyone of payload structure identifiers;
A2, constructing an optical channel transport unit frame of the first asynchronous mapping manner, in an adjusting and controlling byte thereof, predefining, using at least three bits, a filling state of a positive/negative adjusting byte, adding a negative adjusting byte in an optical channel payload unit overhead region of the optical channel transport unit frame, and adding a positive adjusting byte in a payload structure;
A3, constructing, using a reference clock, an overclocked optical channel transport unit frame, and the frequency thereof being 11.0491Gbit/s±20ppm.

2. The method according to Claim 1, **characterized in that** before using a first asynchronous mapping manner to transparently transmit 10GE Ethernet signal, a judging step is executed: judging whether the first asynchronous mapping manner is usable.

3. The method according to Claim 1, **characterized in that** in step A2, at least five kinds of filling states of the positive/negative adjusting byte are pre-defined as shown in the following table.
| 3 bits | negative adjusting byte 1 | negative adjusting byte 2 | positive adjusting byte 1 | positive adjusting byte 2 |
|---|---|---|---|---|
| 000 | adjusting byte | data byte | data byte | data byte |
| 001 | data byte | data byte | data byte | data byte |
| 010 | adjusting byte | adjusting byte | data byte | data byte |
| 011 | adjusting byte | adjusting byte | adjusting byte | data byte |
| 100 | adjusting byte | adjusting byte | adjusting byte | adjusting byte |

4. The method according to Claim 1, **characterized in that** in step A3, the frequency of the overclocked optical channel transport unit frame is 11.0491Gbit/s.

5. The method according to Claim 1, **characterized in that** the other 5 undefined bits of the adjusting and controlling byte are used as identifier bits, and a majority decision principle is used to judge whether the received adjusting and controlling byte is correct.

6. The method according to Claim 1, **characterized in that** the frequency of the reference clock is 690.5688Mbit/s or 172.6422Mbit/s.

7. The method according to Claim 1, **characterized in that** the reference clock is a clock which is allogenous to the 10GE Ethernet signal.

8. The method according to Claim 7, **characterized in that** the reference clock is a system clock or an independent auto-oscillation clock.

## Patentansprüche

1. Verfahren zum transparenten Senden des 10GE-Ethernetsignals durch das optische Transportnetzwerk unter Verwendung einer ersten asynchronen Zuordnungsform zum transparenten Senden des 10GE-Ethernetsignals; wobei die Konstruktion der ersten asynchronen Zuordnungsform die folgenden Schritte beinhaltet:
A1, Angeben der ersten asynchronen Zuordnungsform unter Verwendung eines reservierten Wertes von einem beliebigen von Nutzlastanordnungsidentifikatoren;
A2, Konstruieren eines optischen Kanaltransporteinheitrahmens der ersten asynchronen Zuordnungsform in einem Anpassungs- und Steuerbyte davon, Vordefinieren, unter Verwendung von zumindest drei Bits, eines Füllzustands eines positiven/negativen Anpassungsbytes, Hinzufügen eines negativen Anpassungsbytes in einen Overhead-Bereich der Nutzlasteinheit des optischen Kanals des optischen Kanaltransporteinheitrahmens, und Hinzufügen eines positiven Anpassungsbytes in eine Nutzlastanordnung;
A3, Konstruieren, unter Verwendung eines Referenztaktes, eines übertakteten optischen Kanaltransporteinheitrahmens und wobei die Frequenz davon 11,0491 Gbit/s±20 ppm beträgt.

2. Verfahren nach Anspruch 1, **dadurch gekennzeichnet, dass** vor Verwendung einer ersten asynchronen Zuordnungsform zum transparenten Senden des 10GE-Ethernetsignals ein Beurteilungsschritt ausgeführt wird: Beurteilung, ob die erste asynchrone Zuordnungsform verwendbar ist.

3. Verfahren nach Anspruch 1, **dadurch gekennzeichnet, dass** in Schritt A2 zumindest fünf Arten von Füllzuständen des positiven/negativen Anpassungsbytes wie in der folgenden Tabelle dargestellt vordefiniert sind.
| 3 Bits | negatives Anpassungsbyte 1 | negatives Anpassungsbyte 2 | positives Anpassungsbyte 1 | positives Anpassungsbyte 2 |
|---|---|---|---|---|
| 000 | Anpassungsb yte | Datenbyte | Datenbyte | Datenbyte |
| 001 | Datenbyte | Datenbyte | Datenbyte | Datenbyte |
| 010 | Anpassungsb yte | Anpassungsb yte | Datenbyte | Datenbyte |
| 011 | Anpassungsb yte | Anpassungsb yte | Anpassungsb yte | Datenbyte |
| 100 | Anpassungsb yte | Anpassungsb yte | Anpassungsb yte | Anpassungsb yte |

4. Verfahren nach Anspruch 1, **dadurch gekennzeichnet, dass** in Schritt A3 die Frequenz des übertakteten optischen Kanaltransporteinheitrahmens 11,0491 Gbit/s beträgt.

5. Verfahren nach Anspruch 1, **dadurch gekennzeichnet, dass** die anderen 5 undefinierten Bits des Anpassungs- und Steuerbytes als Identifikatorbits verwendet werden und ein Mehrheitsentscheidungsprinzip verwendet wird, um zu beurteilen, ob das empfangene Anpassungs- und Steuerbyte korrekt ist.

6. Verfahren nach Anspruch 1, **dadurch gekennzeichnet, dass** die Frequenz des Referenztaktes 690,5688 Mbit/s oder 172,6422 Mbit/s beträgt.

7. Verfahren nach Anspruch 1, **dadurch gekennzeichnet, dass** der Referenztakt ein Takt ist, welcher allogen zu dem 10GE-Ethernetsignal ist.

8. Verfahren nach Anspruch 7, **dadurch gekennzeichnet, dass** der Referenztakt ein Systemtakt oder ein unabhängiger Autooszillationstakt ist.

## Revendications

1. Procédé de transmission transparente du signal Ethernet 10GE à travers le réseau de transport optique, à l'aide d'une première manière de mappage asynchrone pour la transmission transparente du signal Ethernet 10GE ; dans lequel la construction de la première manière de mappage asynchrone inclut les étapes suivantes :
A1, l'indication de la première manière de mappage asynchrone à l'aide d'une valeur réservée de l'un quelconque d'identifiants de structure de charge utile ;
A2, la construction d'une trame d'unité de transport de canal optique de la première manière de mappage asynchrone, dans un octet de réglage et de commande de celle-ci, la prédéfinition, à l'aide d'au moins trois bits, d'un état de remplissage d'un octet de réglage positif/négatif, l'ajout d'un octet de réglage négatif dans une région de transfert d'unité de charge utile de canal optique de la trame d'unité de transport de canal optique, et l'ajout d'un octet de réglage positif dans une structure de charge utile ;
A3, la construction, à l'aide d'une horloge de référence, d'une trame d'unité de transport de canal optique surcadencée, et la fréquence de celle-ci étant 11,0491 Gbit/s ± 20 ppm.

2. Procédé selon la revendication 1, **caractérisé en ce que**, avant d'utiliser une première manière de mappage asynchrone pour la transmission transparente d'un signal Ethernet 10GE, une étape de jugement est exécutée : juger si la première manière de mappage asynchrone est utilisable.

3. Procédé selon la revendication 1, **caractérisé en ce que**, à l'étape A2, au moins cinq sortes d'états de remplissage de l'octet de réglage positif/négatif sont prédéfinies comme le montre la table suivante.
| 3 bits | octet de réglage négatif 1 | octet de réglage négatif 2 | octet de réglage positif 1 | octet de réglage positif 2 |
|---|---|---|---|---|
| 000 | octet de réglage | octet de données | octet de données | octet de données |
| 001 | octet de données | octet de données | octet de données | octet de données |
| 010 | octet de réglage | octet de réglage | octet de données | octet de données |
| 011 | octet de réglage | octet de réglage | octet de réglage | octet de données |
| 100 | octet de réglage | octet de réglage | octet de réglage | octet de réglage |

4. Procédé selon la revendication 1, **caractérisé en ce que**, à l'étape A3, la fréquence de la trame d'unité de transport de canal optique surcadencée est 11,0491 Gbit/s.

5. Procédé selon la revendication 1, **caractérisé en ce que** les autres 5 bits non définis de l'octet de réglage et de commande sont utilisés en tant que bits d'identifiant et un principe de décision à la majorité est utilisé pour juger si l'octet de réglage et de commande est correct.

6. Procédé selon la revendication 1, **caractérisé en ce que** la fréquence de l'horloge de référence est 690,5688 Mbit/s ou 172,6422 Mbit/s.

7. Procédé selon la revendication 1, **caractérisé en ce que** l'horloge de référence est une horloge qui est allogène au signal Ethernet 10GE.

8. Procédé selon la revendication 7, **caractérisé en ce que** l'horloge de référence est une horloge système ou une horloge auto-oscillante indépendante.
